**Europäisches Patentamt**

**European Patent Office**

**Office européen des brevets**

(11) Veröffentlichungsnummer: **0 369 308**

**A1**

(12) **EUROPÄISCHE PATENTANMELDUNG**

(21) Anmeldenummer: **89120657.5**

(22) Anmeldetag: **08.11.89**

(51) Int. Cl.⁵: **A01D 78/10, A01B 73/02**

(30) Priorität: **15.11.88 DE 8814293 U**

(43) Veröffentlichungstag der Anmeldung:
**23.05.90 Patentblatt 90/21**

(84) Benannte Vertragsstaaten:
**AT BE CH DE FR LI NL**

(71) Anmelder: **Alois Pöttinger Maschinenfabrik GmbH**

**A-4710 Grieskirchen(AT)**

(72) Erfinder: **Leposa, Wolfgang**
**Sonnfeldstrasse 17**
**A-4710 Grieskirchen(AT)**
Erfinder: **Kreuzmayr, Robert**
**Kantnermühlstrasse 11**
**A-4701 Bad Schallerbach(AT)**
Erfinder: **Mairhuber, Josef**
**Adenbruck 9**
**A-4722 Peuerbach(AT)**

(74) Vertreter: **Dupal, Helmut, Dipl-Ing.**
**Jägerweg 12**
**A-4702 Wallern(AT)**

(54) **Heuwerbungsmaschine.**

㉗ Heuwerbungsmaschine mit mehr als zwei an aufrechten Rechradachsen (34) auf dem Boden abgestützten und paarweise gegensinnig angetriebenen, mit ihren Rechzinken (11) ineinanderlaufenden Rechrädern (1,1′,1″,1‴), die an einem Maschinenrahmen (2) angebracht sind, der aus einem inneren und einem äußeren Maschinenrahmenteil (3,4) besteht, die über waagrecht und lotrecht verschwenkbare Gelenke (14,15) verbunden sind, an denen sie von der Arbeitsstellung (6) in die Transportstellung (7) verschwenkbar sind und die mit Rechradgetrieben (51) für jedes Rechrad (1 bis 1‴) versehen sind, die über eine Antriebswelle (50) von einem Hauptgetriebe (49) her antreibbar sind, das wiederum vom zugfahrzeug angetrieben ist, wobei die Antriebswelle (50) entsprechend den Teilungen des Maschinenrahmens (2) an den Gelenken (15) geteilt und mit dauernd verbundenen Kupplungselementen (52) verbunden ist und wenigstens ein Rechrad (1,1′,1″,1‴ an dem zugeordneten Maschinenrahmenteil (3 oder 4 oder 5) vor der Umstellung von der Arbeitsstellung (6) in die Transportstellung (7) mit einer Verriegelungsvorrichtung (8) in einer vorbestimmten Drehstellung (9) festlegbar ist.

Fig. 3

# Heuwerbungsmaschine

Die Erfindung betrifft eine Heuwerbungsmaschine zum Streuen und Wenden von Halmgut mit den Merkmalen des Oberbegriffes des Anspruches 1.

Maschinen dieser Gattung weisen meist vier oder sechs Rechräder auf, die paarweise gegenläufig angetrieben sind und an ihrer Frontseite das Halmgut zusammenrechen und zwischen jeweils einem gegenläufigen, nach hinten gegen die Fahrtrichtung zusammenlaufenden Rechradpaar breit ausstreuen.

Für die Anpassung an Bodenunebenheiten sind bei diesen Maschinen nur die beiden innersten Rechräder an einem inneren Maschinenrahmen, der mit einem Zugbalken fest verbunden ist, gelagert, während die äußeren Rechräder an äußeren Maschinenrahmen gelagert sind, die an dem inneren Maschinenrahmen um in Fahrtrichtung ausgerichtete, waagrechte, oder im wesentlichen lotrechte Schwenkachsen verschwenkbar gelagert sind.

Für den Straßentransport der Heuwerbungsmaschine ist der Maschinenrahmen zu breit, so daß die äußeren Rechräder an den äußeren Maschinenrahmen in eine lotrechte Transportstellung hochgeschwenkt werden, wobei zum Schutz vor Verletzungen die Rechzinken nach innen gestellt werden können, oder daß die äußeren Rechräder an den äußeren Maschinenrahmen, bezogen auf die Fahrtrichtung der Maschine, nach hinten verschwenkt werden, wobei der Maschinenrahmen zwischen dem inneren und dem äußeren Maschinenrahmen geöffnet werden muß.

Der Antrieb der Rechräder erfolgt von einem Gelenkwellenanschluß aus über eine Gelenkwelle von einem Zugfahrzeug her und läuft über ein Verteilergetriebe im inneren Maschinenrahmen und durch die äußeren Maschinenrahmen, wobei die Gelenkstellen entweder mit Doppelgelenken, die das Sperren des Antriebsstranges möglichst vermeiden, oder mit Kreuzgelenken, die den Stillstand der Antriebslinie aus dem gleichen Grund notwendig machen, oder mit Antriebskupplungen, bei denen das Einkuppeln der ausgekuppelten Antriebsteile in der richtigen Lage der Rechzinken zueinander wichtig ist, überwunden werden.

In der Transportstellung der Maschine, mit am äußeren Maschinenrahmen nach oben verschwenkten Rechrädern, ist die lichte Höhe der Heuwerbungsmaschine, besonders bei größeren Rechraddurchmessern, für viele Toreinfahrten zu hoch und überragt die Kabinendächer der in Frage kommenden Zugfahrzeuge, so daß ein oder mehrere Rechzinkenträger geteilt ausgeführt werden und die äußeren Rechzinkenträger an den inneren Rechzinkenträgern in Richtung auf die benachbarten Rechzinkenträger hin verschwenkbar gelagert sind. Die gleiche Maßnahme muß bei Maschinen mit großer Gesamtbreite der beiden inneren Rechräder angewandt werden.

Bei Maschinen mit mehr als vier Zinkenrädern werden die äußeren Zinkenräder gegenüber den inneren beiden Zinkenrädern, gewöhnlich unter Zuhilfenahme hydraulischer Verstellmittel, um eine im wesentlichen lotrechte Schwenkachse nach hinten verschwenkt, in eine Lage, bei der die benachbarten Maschinenrahmenteile zueinander um etwa mehr als 90 Winkelgrade abgewinkelt stehen, so daß der Maschinenrahmen, dessen benachbarte Maschinenrahmenteile mit einer Verriegelungsvorrichtung in der Arbeitsstellung gehalten sind, die für die Überführung der Maschine in die Transportstellung entriegelt wird, in der Transportstellung der Maschine geöffnet ist. Durch die Verschwenkung der äußeren und der inneren benachbarten Rechräder zueinander ergibt sich gleichfalls die Notwendigkeit, wenigstens einen oder zwei Rechzinkenträger wie vorher beschrieben geteilt und schwenkbar auszubilden, um das Fangen von Rechzinken der benachbarten Rechräder zu vermeiden.

Die Aufgabe der Erfindung besteht darin, bei Heuwerbungsmaschinen der eingangs beschriebenen Art die Rechräder vor der Umstellung der Maschine von der Arbeitsstellung in die Transportstellung in vorbestimmten Stellungen zueinander, oder den Antriebsstrang der Maschine in Bezug auf den Maschinenrahmen festzulegen, bis die Maschine wieder in die Arbeitsstellung umgestellt ist.

Diese Aufgabe wird bei einer Heuwerbungsmaschine der eingangs genannten Gattung mit den Merkmalen der Anspruches 1 gelöst.

Die Unteransprüche, die ausdrücklich einen Teil der Beschreibung bilden, betreffen besonders vorteilhafte Ausgestaltungen der Erfindung.

Die Verriegelung zwischen einem Rechrad und dem zugeordneten Maschinenrahmen, an dem dieses gelagert ist, ist in sehr einfacher baulicher Weise und ohne allzu große Genauigkeitsansprüche möglich, wobei sich Eingriffe in den Maschinenrahmen vermeiden lassen.

Dabei ist es besonders vorteilhaft die Verriegelung so vorzunehmen, daß bei Anwendung von an Zinkenträgern verschwenkbaren Rechzinken zur Verringerung der Maschinenhöhe und/oder der Maschinenbreite, die um,an dem zugehörigen Recharm angebrachte Zinkenträgerachse in Richtung auf die benachbarten Rechzinken verschwenkbar sind, das größtmögliche Ausmaß der Verringerung erzielt wird. Bei dauernd verbundenen Kupplungselementen der Antriebswelle ist die Feststellung des Antriebsstranges wichtig, um ein Verdrehen der Rechräder aus der günstigsten Lage zu verhindern.

Bei Abwinkelungen der Maschinenrahmenteile
zueinander , bei der dauernd verbundene Kupplungselemente des Anstriebsstranges bereits sperren, kann auf einfache Weise die Beschädigung
durch unbeabsichtigtes Laufenlassen des Antriebes
vermieden werden. Bei sich öffnenden Kupplungselementen des Antriebsstranges ist es vorteilhaft,
die beiden benachbarten Rechräder an einem Gelenk der Maschinenrahmenteile zu verriegeln, so
daß die Kupplungselemente in der Stellung bleiben, die sie beim Auskuppeln innehatten.

Vorteilhaft ist die Gestaltung der Verriegelungsvorrichtung besonders dann, wenn das Verschwenken eines Rechzinkenträgers verwendbar ist, sodaß
gleichzeitig ein Bedienungsschritt entfällt.

Besonders vorteilhaft ist es die Verriegelungsvorrichtung unterhalb des Rechradtellers aus einer
Raste am feststehenden Teil und aus einem längsverschiebbaren Riegelbolzen an dem Rechrad aufzubauen, der dadurch mittels der Kulisse des
Rechzinkenträgers betätigbar ist.

Zur Vereinfachung der Bedienung und Vergrößerung der Sicherheit ist es günstig, die Kulissenbahn möglichst ohne Rückstellkraft auf den Riegelbolzen auszubilden und den Schwenkbereich der
Kulisse durch Anschläge zu begrenzen und die
Kulisse federnd in ihrer Lage zu halten, damit ein
Festfressen auch unter schwierigen Witterungsverhältnissen nicht auftritt.

Bei einem sich öffnenden Gelenk zwischen
Maschinenrahmenteilen ist es vorteilhaft, die Öffnung des Gelenkes und die Sperrung der Rechräder gleichzeitig mit einem Bedienungsvorgang vorzunehmen, sobald die Verschwenkung der Rechzinkenträger an dem entsprechenden Rechrad vorgenommen wurde, während die Gestaltung der
Verriegelungsvorrichtung und deren Bedienung am
einfachsten wird, wenn die Raste auf dem Rechradteller und der Riegel auf dem Rahmenteil angebracht ist und das Betätigungselement für das Gelenk zwischen den Maschinenrahmenteilen gleichzeitig zur Betätigung der Verriegelungsvorrichtung
dient.

Die Kupplungselemente der Antriebswelle können, je nach dem wie die Heuwerbungsmaschine
aufgebaut ist und wie deren Bedienung vorgesehen
ist, entweder von einfachen Kreuzgelenken, oder
von Doppelkreugelenken für durchgehend verbundene Kupplungselemente oder von Klauenkupplungen für sich öffnende Kupplungselemente gebildet
sein.

Die Erfindung wird im Folgenden an Hand der
Zeichnung zweier Ausführungsformen beschrieben.
Dabei zeigt:

Fig. 1 eine Heuwerbungsmaschine mit vier
Rechrädern mit hochschwenkbaren äußeren Maschinenrahmenteilen auf der rechten Seite der
Zeichnung und eine Heuwerbungsmaschine mit
sechs Rechrädern mit nach hinten verschwenkbaren Maschinenrahmenteilen auf der linken Seite der
Zeichnung,in Draufsicht, schematisch,

Fig. 2 eine Seitenansicht der Maschine auf
der rechten Seite von Fig.1, mit nach innen verschwenkten äußeren Rechrädern und herabgeschwenkten Schutzbügeln und mit angedeuteter
Verringerung der Maschinenhöhe und der Maschinenbreite,

Fig. 3 ein Gelenk der Heuwerbungsmaschine
auf der rechten Seite von Fig.1, in der Draufsicht,
schematisch,

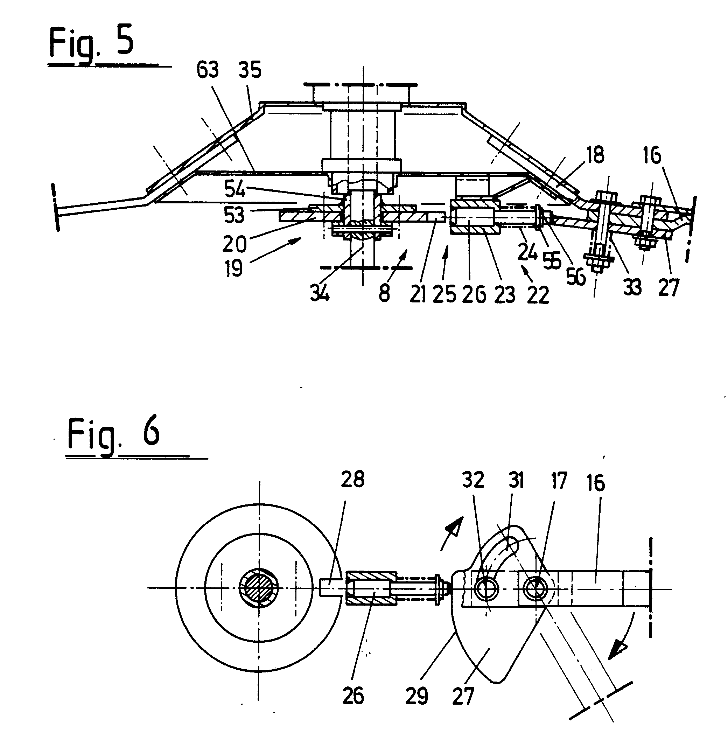

Fig. 4 einen Schnitt durch das Gelenk gemäß Fig.3 , nach I-I,

Fig. 5 einen Radialschnitt durch ein Rechrad
mit Verriegelungsvorrichtung, schematisch und

Fig. 6 einen Ausschnitt aus Fig. 5 mit der
Verriegelungsvorrichtung in Draufsicht.

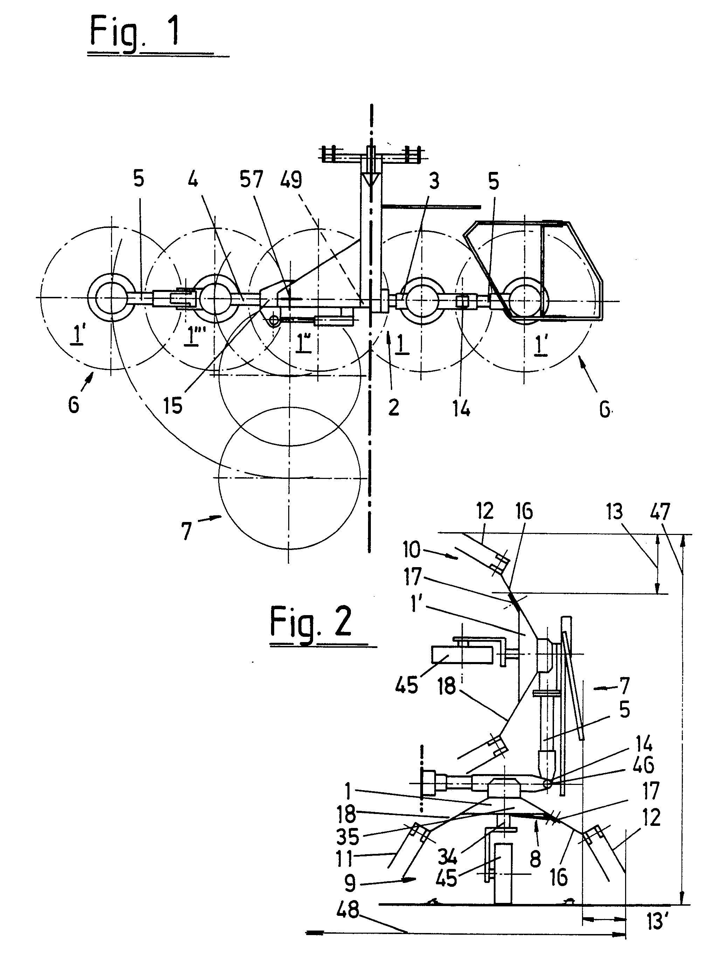

Die in Fig.1 auf der rechten Seite dargestellte
Heuwerbungsmaschine ist mit vier Rechrädern 1,1´
ausgestattet, von denen zwei wiedergegeben sind,
die an einem Maschinenrahmen 2 an aufrechten,
auf dem Boden mit Stützrädern 45 abgestützten
Rechradachsen 34 paarweise gegenläufig antreibbar gelagert sind.

Der Maschinenrahmen 2 besteht aus einem
inneren Maschinenrahmenteil 3 und zwei äußeren
Maschinenrahmenteilen 5, die an den Teilungsstellen mit dem inneren Maschinenrahmen 3 über ein
Gelenk 14 verbunden und um eine etwa waagrechte Schwenkachse 46 von einer waagrechten Arbeitsstellung 6 in eine lotrechte Transportstellung 7
der äußeren Maschinenrahmenteile 5 verschwenkbar sind.

Die Rechräder 1 und 1´ tragen an Rechradtellern 35 radial und schräg zum Boden ausgerichtete
Recharme 18,an denen die Rechzinken 11 befestigt sind.

Zur Verringerung der Maschinenhöhe 47 und
der Maschinenbreite 48 um das angedeutete Ausmaß 13 und 13´ sind jeweils zwei benachbarte
Recharme 18 mit verschwenkbaren Rechzinkenträgern 16 versehen, die die verschwenkbaren Rechzinken 12 tragen und jeweils um ein Rechzinkenträgergelenk 17 des Recharmes 18 in Richtung auf
die jeweils benachbarten Rechzinken 11 verschwenkbar sind.

In einer vorbestimmten Drehstellung 9 des
Rechrades 1, in der das Ausmaß 13´ der Verringerung der Maschinenbreite 48 am größten ist und in
der das äußerste Rechrad 1´ eine Drehstellung 10
einnimmt, in der das Ausmaß der Verringerung 13
der Maschinenhöhe 47 am größten ist, kann das
Rechrad 1 am inneren Maschinenrahmenteil 3 mit
einer Verriegelungsvorrichtung 8 in seiner Lage
zum Maschinenrahmenteil 3 festgelegt werden.

Der Antriebsstrang der Maschine, der vom Hauptgetriebe 49 über die Antriebswelle 50 zu den Rechradgetrieben 51 verläuft und nur für die diesbezüglich gleich aufgebaute zweite Maschine auf der linken Seite von Fig.1 dargestellt ist, wird durch den Vorgang der Verriegelung festgelegt, so daß ein Verdrehen der Rechräder z.B. durch Anstoßen von Rechzinken an Hindernissen oder durch Hin- und Herschwingen des des hochgeschwenkten äußersten Rechrades 1′ in der Transportstellung 7 sicher vermieden wird.

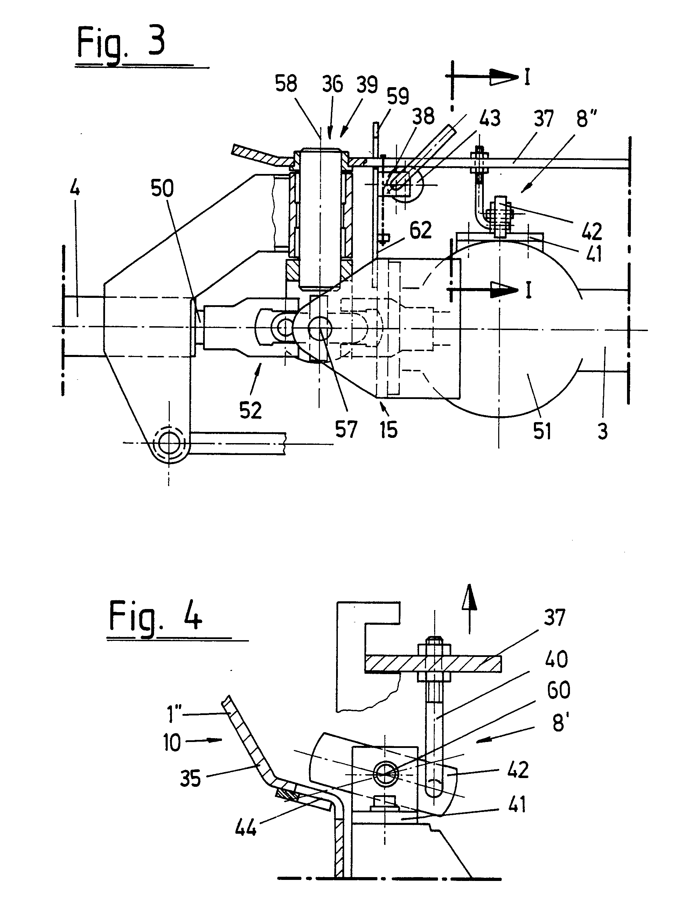

Die Antriebswelle 50 ist an den Teilungen der Maschinenrahmenteile 3 und 4 oder 4 und 5 mit dauernd verbundenen Kupplungselementen 52 gelenkig verbunden, die wie in Fig.3 dargestellt von Doppelkreuzgelenken, aber auch Einfachkreuzgelenken gebildet sein können.

Gleichzeitig ist es mit dieser Verriegelung möglich den Antriebsstrang festzulegen, wenn die äußeren Maschinenrahmenteile 5 um mehr als die gezeigten 90° hoch- und nach innen zu verschwenkt werden, damit auch bei nicht nach innen gedrehtem Rechrad 1′ die Rechzinken 11 in einer verringerten Maschinenbreite 48 liegen und die Gefährdung von Verkehrsteilnehmern während des Transportes vermieden wird, ohne daß ein Sperren der dauernd verbundenen Kupplungselemente 52 der Antriebswelle 50 eintritt, das bei Verdrehung des Rechrades zu Schäden führen kann.

Die Verriegelungsvorrichtung 8 besteht aus einem Rastteil 19 und dem Riegelteil 22, die unterhalb des Rechradtellers 35 angeordnet sind. Der Rastteil 19 umfaßt eine Rastscheibe 20, in die eine Rastausnehmung 21 für einen Riegelbolzen 26 eingearbeitet ist und die an einem Flansch 53 befestigt ist, der mit einer Buchse 54 verschweißt ist, die mittels einer Spannhülse auf der Rechradachse 34 verdrehfest befestigt ist. Der Riegelteil 22 ist an einem Versteifungsteller 63 des Rechradtellers 35 befestigt und liegt damit unter diesem geschützt.

Der Riegelbolzen 26 ist im Riegelteil 22 in einem Führungsteil 23 gelagert und ist von einer Riegelfeder 24, die sich an dem Führungsteil 23 und an einer Stützscheibe 55 mit Federring 56 des Riegelbolzens 26 abstützt, in der entriegelten Stellung 25 gehalten.

Der Riegelbolzen 26 wird von der Führungsbahn 29 einer Kulisse 27, die mit dem verschwenkbaren Rechzinkenträger 16 verdrehfest verbunden ist, in die Verriegelungsstellung 28 gedrängt, wenn der Rechzinkenträger 16 um das Rechzinkenträgergergelenk 17 - in Form einer Verschraubung - aus der radialen Stellung verschwenkt wird. Die Kulisse 27 ist dazu mit einem Langloch 31 versehen, in das ein Anschlagbolzen 32 eingreift, der am Recharm 18 befestigt ist und auf dem eine Druckfeder 33 eingespannt ist, die Kulisse in ihrer lage hält.

Die Führungsbahn 29 der Kulisse 27 ist so geführt, daß keine Rückstellkräfte über die Kulisse 27 auf den verschwenkbaren Rechzinkenträger 16 wirkend dessen Zurückschwenken in die Radialstellung hervorrufen können. Dieser Rechzinkenträger gehört zu jenen, die zwecks Verringerung der Maschinenbreite 48 verschwenkbar ausgebildet sind.

Die auf der linken Seite der Fig.1 dargestellte Heuwerbungsmaschine umfaßt sechs Rechräder 1′,1″ und 1‴, die an den Maschinenrahmenteilen 3,4 und 5 in gleicher Weise angeordnet sind, wie vorher für die Maschine auf der rechten Seite beschrieben wurde.

Die Maschinenrahmenteile 3 und 4 sind aber zusätzlich für die Umstellung von der Arbeitsstellung 6 in die Transportstellung 7 um eine lotrechte Schwenkachse 57 nach hinten verschwenkbar, wobei das verbindende Gelenk 15 geöffnet wird, während es in der Arbeitsstellung 6 mit einer Riegelvorrichtung 36 verriegelt ist, indem ein Riegelbalken 37 auf der waagrechten Schwenkachse 58 in einer Riegelstellung 39 von einer Rückstellfeder 38 gehalten ist.

Zur Verriegelung des Rechrades 1″ mit dem Maschinenrahmenteil 3 ist eine Verriegelungsvorrichtung 8′ vorgesehen, deren Riegelstück 42 auf dem Getriebegehäuse 41 mit einer Halterung 60 an einer Achse 61 verschwenkbar gelagert ist.

Das Riegelstück 42 kann in einer vorbestimmten Drehstellung 10 des Rechrades 1″ in eine Raste 44 in Form einer Ausnehmung am Rechradteller 35 des Rechrades 1″ verriegeln, wenn es über ein angelenktes Gestänge 40, das andernends mit dem Riegelbalken 37 der Riegelvorrichtung 36 verbunden ist, betätigt wird.

Dies geschieht, wenn der Riegelbalken 37 von einem Exzenterstück 43, das an der Führung 59 des Riegelbalkens 37 in einer Halterung 62 drehbar gelagert ist, von der waagrechten Schwenkachse 58 herabgedrängt wird und damit das Gelenk 15 entriegelt. Das Exzenterstück 43 ist mit einer Handhabe für die Betätigung versehen.

Mit dieser Verriegelung werden die Rechräder in ihrer Lage zueinander festgehalten, so daß bei Verschwenkung von Rechzinkenträgern, die für die Überführung des Maschinenrahmens in die Transportstellung notwendig sein kann, keine Verstellung der Rechräder zueinander eintreten kann und damit auch Störungen beim Umstellen des Maschinenrahmens vermiemieden werden.

Bei Anwendung von sich öffnenden Kupplungselementen (nicht dargestellt), z.B. in Form einer Klauenkupplung, ist es erforderlich, daß beiderseits des Gelenkes 14 oder 15 das Rechrad 1 und 1′ oder 1″ und 1‴ verriegelt werden, um ein Verstellen der Rechräder untereinander in der Transportstellung 7 zu vermeiden.

Bezugszeichenverzeichnis :

1 Rechrad mit Verriegelung
1' äußerstes Rechrad
1'' inneres Rechrad an Gelenk 15
1''' äußeres Rechrad an Gelenk 15
2 Maschinenrahmen
3 innerer Maschinenrahmenteil
4 mittlerer Maschinenrahmenteil
5 äußerer Maschinenrahmenteil
6 Arbeitsstellung der Maschine
7 Transportstellung
8 Verriegelungsvorrichtung
8' Verriegelungsvorrichtung an Gelenk 15
9 vorbestimmte Drehstellung des Rechrades 1, oder 1', oder 1'' oder 1'''
10 Drehstellung des äußersten Rechrades 1'
11 Rechzinken
12 verschwenkbare Rechzinken
13,13' Ausmaß der Verringerung von Maschinenhöhe und Maschinenbreite
14 Gelenk zwischen benachbarten Maschinenrahmenteilen 3 und 5 oder 4 und 5
15 Gelenk zwischen Maschinenrahmenteil 3 und 4 , sich öffnend
16 verschwenkbarer Rechzinkenträger
17 Rechzinkenträgergelenk des Recharmes 18
18 Recharm
19 Rastteil der Verriegelungsvorrichtung 8
20 Rastscheibe
21 Rastausnehmung
22 Riegelteil
23 Führungsteil
24 Riegelfeder
25 entriegelte Stellung des Riegelbolzens 26
26 Riegelbolzen
27 Kulisse
28 Verriegelungsstellung
29 Führungsbahn
30 Drehstellung des inneren Rechrades 1'' oder 1''
31 Langloch
32 Anschlagbolzen
33 Druckfeder
34 Rechradachse
35 Rechradteller
36 Riegelvorrichtung des Gelenkes 15
37 Riegelbalken
38 Rückstellfeder des Riegelbalkens 37
39 Riegelstellung des Riegelbalkens 37
40 Gestänge
41 Getriebegehäuse des Rechrades 1''
42 Riegelstück
43 Exzenterstück
44 Raste der Verriegelungsvorrichtung 8'
45 Stützrad
46 waagrechte Schwenkachse

47 Maschinenhöhe
48 Maschinenbreite
49 Hauptgetriebe
50 Antriebswelle
51 Rechradgetriebe
52 dauernd verbundenes Kupplungselement
53 Flansch
54 Buchse
55 Stützscheibe
56 Federring
57 lotrechte Schwenkachse des Gelenkes 15
58 waagrechte Schwenkachse des Gelenkes 15
59 Führung des Riegelbalkens 37
60 Halterung des Riegelstückes 42
61 Achse des Riegelstückes 42
62 Halterung für das Exzenterstück 43
63 Versteifungsteller

**Ansprüche**

1. Heuwerbungsmaschine zum Streuen und Wenden von Halmgut, mit mehr als zwei an aufrechten Rechradachsen auf dem Boden abgestützten und paarweise gegensinnig angetriebenen, mit ihren Rechzinken teilweise ineinanderlaufenden Rechrädern, die an einem Maschinenrahmen angebracht sind, der aus einem inneren und wenigstens einem äußeren Maschinenrahmenteil besteht, die über waagrecht und/oder lotrecht verschwenkbare Gelenke verbunden sind, an denen sie von der Arbeitsstellung in die Transportstellung verschwenkbar sind und die mit Rechradgetrieben für jedes Rechrad versehen sind, die über eine Antriebswelle von einem Hauptgetriebe her antreibbar sind, das wiederum vom Zugfahrzeug angetrieben ist, wobei die Antriebswelle entsprechend den Teilungen des Maschinenrahmens an den Gelenken geteilt und mit dauernd verbundenen oder beim Umstellen des Maschinenrahmens lösbaren Kupplungselementen verbunden ist, dadurch gekennzeichnet, daß bei einem Antriebsstrang mit dauernd verbundenen Kupplungselementen (52) wenigstens ein Rechrad (1,1',1'',1''') mit dem zugeordneten Maschinenrahmenteil ( 3 oder 4 oder 5) vor der Umstellung von der Arbeitsstellung (6) in die Transportstellung (7) mit einer Verriegelungsvorrichtung (8) in einer vorbestimmten Drehstellung (9) festlegbar ist.

2. Heuwerbungsmaschine nach Anspruch 1, dadurch gekennzeichnet, daß bei einem Antriebsstrang mit dauernd verbundenen Kupplungselementen (52) die Verriegelung wenigstens eines der Rechräder (1,1',1'',1''') in einer Drehstellung (10) der äußersten Rechräder (1') erfolgt, in der deren verschwenkbare Rechzinken (12) sich in einer Lage befinden, in der die Maschinenhöhe (47) im größten Ausmaß (13) und/oder in einer Drehstellung (30) der inneren Rechräder (1 oder 1″) erfolgt, in der deren verschwenkbare Rechzinken (12) sich in einer Lage befinden, in der die Maschinenbreite (48) im größten Ausmaß (13′) verringert wird, oder in einer Drehstellung (30) der inneren Rechräder (1″) erfolgt, in der deren verschwenkbare Rechzinken (12) sich in einer Lage bedinden, in der die Umstellung von der Arbeitsstellung (6) in die Transportstellung (7) der Maschine möglich ist.

3. Heuwerbungsmaschine nach Anspruch 1, dadurch gekennzeichnet, daß bei dauernd verbundenen Kupplungselementen (52) wenigstens ein Rechrad (1′) vor der Umstellung der Maschinenrahmenteile (4) bis zu einer Abwinkelung, in der die Kupplungselemente (52) infolge des Grades der Abwinkelung die Drehbewegung sperren, mit einer Verriegelungsvorrichtung (8) mit dem zugeordneten Maschinenrahmenteil (3) verriegelt wird.

4. Heuwerbungsmaschine zum Streuen und Wenden von Halmgut, mit mehr als zwei an aufrechten Rechradachsen auf dem Boden abgestützten und paarweise gegensinnig angetriebenen, mit ihren Rechzinken teilweise ineinanderlaufenden Rechrädern, die an einem Maschinenrahmen angebracht sind, der aus einem inneren und wenigstens einem äußeren Maschinenrahmenteil besteht, die über waagrecht oder lotrecht verschwenkbare Gelenke verbunden sind, an denen sie von der Arbeitsstellung in die Transportstellung verschwenkbar sind und die mit Rechradgetrieben für jedes Rechrad versehen sind , die über eine Antriebswelle von einem Hauptgetriebe her antreibbar sind, das wiederum vom Zugfahrzeug angetrieben ist, wobei die Antriebswelle entsprechend den Teilungen des Maschinenrahmens an den Gelenken geteilt und mit dauernd verbundenen oder beim Umstellen des Maschinenrahmens lösbaren Kupplungselementen verbunden ist, dadurch gekennzeichnet, daß bei einem Antriebsstrang mit sich öffnenden Kupplungselementen an jedem Gelenk (14) zwischen benachbarten Maschinenrahmenteilen (3 und 5 oder 4 und 5) die benachbarten Rechräder (1″ und 1″, oder 1″ und 1′) vor der Umstellung von der Arbeitsstellung (6) in die Transportstellung (7), jeweils mit einer Verriegelungsvorrichtung (8) mit dem jeweiligen, zugeordneten Maschinenrahmenteil (3 und 4) in einer vorbestimmten Drehstellung (9) des Rechrades (1″ oder 1‴) festlegbar sind.

5. Heuwerbungsmaschine nach einem der Ansprüche 1 bis 4, dadurch gekennzeichnet, daß die Verriegelungsvorrichtung (8) an einem Rechrad (1) angebracht ist, bei dem wenigstens ein verschwenkbarer Rechzinkenträger (16) an einem Recharm (18) des Rechrades (1) befestigt ist und mit der bei Verschwenkung des Rechzinkenträgers (16) um das Rechzinkenträgergelenk (17) das Rechrad (1) verriegelt wird, nachdem es zuvor in die vorbestimmte Drehstellung (9) gebracht ist.

6. Heuwerbungsmaschine nach Anspruch 5, dadurch gekennzeichnet, daß die Verriegelungsvorrichtung (8) aus einem Rastteil (19), mit einer mit der stillstehenden Rechradachse (34) fest verbundenen Rastscheibe (20), in die eine Rastausnehmung (21) eingearbeitet ist und aus einem unter dem Rechradteller (35) des Rechrades (1) angebrachten Riegelteil (22), der aus einem, in einem Führungsteil (23) verschiebbaren, mit einer Riegelfeder (24) in entriegelter Stellung (25) gehaltenen Riegelbolzen (26) besteht und bei der der Riegelbolzen (26) von einer Kulisse (27) in die Verriegelungsstellung (28) überführt wird, die mit dem verschwenkbaren Rechzinkenträger (16) fest verbunden ist.

7. Heuwerbungsmaschine nach Anspruch 6, dadurch gekennzeich net, daß die Kulisse (27) eine Führungsbahn (29) für den Riegelbolzen (30) aufweist, die in der verriegelten Stellung des Rechrades (1) keine Stellkraft vom Riegelbolzen (26) auf den verschwenkbaren Rechzinkenträger (16) überträgt.

8. Heuwerbungsmaschine nach Anspruch 6 oder 7, dadurch gekennzeichnet, daß die Kulisse (27) ein Langloch (31) für einen Anschlagbolzen (32) aufweist und der Anschlagbolzen (32) den Schwenkbereich der Kulisse (27) und damit des verschwenkbaren Rechzinkenträgers (16) bestimmt, wobei dessen Druckfeder (33) die Kulisse (27) in ihrer Lage hält.

9. Heuwerbungsmaschine nach einem der Ansprüche 1 bis 4, dadurch gekennzeichnet, daß eine Verriegelungsvorrichtung (8′) an einem Rechrad (1″) angebracht ist, an dem ein, zur Verstellung von der Arbeitsstellung 86) in die Transportstellung (7) zu öffnendes, mit einer Riegelvorrichtung (36) ausgestattetes Gelenk (15) zwischen zwei Maschinenrahmenteilen (3 und 4) angeordnet ist und das Gelenk (15) mit einem Riegelbalken (37) verriegelt, der quer zu seiner Längserstreckung entriegelbar und mit einer Rückstellfeder (38) in der Riegelstellung (39) gehalten ist, der beim Entriegeln des Gelenkes (15) über ein Gestänge (40) die Verriegelungsvorrichtung (8′) des Rechrades (1″) verriegelt.

10. Heuwerbungsmaschine nach Anspruch 9, dadurch gekennzeichnet, daß die Verriegelungsvorrichtung (8′) aus einer Raste (44) im Rechradteller (35) des Rechrades (1″) und aus einem am Getriebegehäuse (41) des Rechrades (1″) gelenkig gelagerten Riegelstück (42) besteht, das mit dem Riegelbalken (37) über ein Gestänge (40) auf Mitnahme verbunden ist.

11. Heuwerbungsmaschine nach Anspruch 9 oder 10, dadurch gekennzeichnet, daß der Riegelbalken (37) und die Verriegelungsvorrichtung (8′) gleichzeitig von einem am Gelenk (15) drehbar gelagerten Exzenterstück (43) betätigbar sind, das bei Betätigung durch Drehen des Exzenters den Riegelbalken (37) aus der verriegelten Stellung drängt.

12. Heuwerbungsmaschine nach einem der Ansprüche 1 bis 4, dadurch gekennzeichnet, daß als dauern verbundene Kupplungselemente (52) Kreuzgelenke oder Doppelkreuzgelenke und als sich öffnende Kupplungselemente Klauenkupplungen angewendet werden.

## Fig. 1

## Fig. 2

## Fig. 3

58 36 39 59
38 43 37 8"
I

4 50 62 42
41
52 57 15 51 3
I

## Fig. 4

37
40
60
8'
1"
10
35 42
44 41

## Fig. 5

## Fig. 6

**Europäisches Patentamt**

# EUROPÄISCHER RECHERCHENBERICHT

Nummer der Anmeldung

EP 89 12 0657

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 329 184 (C. VAN DER LELY NV)<br>* Seite 9, Zeile 15 - Seite 12, Zeile 12; Anspruch 24; Fig 1-4 *<br>--- | 4 | A 01 D 78/10<br>A 01 B 73/02 |
| P,X | EP-A-0 296 666 (C. VAN DER LELY NV)<br>* Zusammenfassung; Seite 11, Zeile 37-52; Fig 5,10 *<br>--- | 1 | |
| A | DE-A-2 431 713 (C. VAN DER LELY NV)<br>* Anspruch 24,26; Seite 6, Zeile 7-18; Fig 1,5 *<br>--- | 1,2,4 | |
| A | FR-A-2 561 858 (ALOIS POTTINGER MASCHINENFABRIK GmbH)<br>* Seite 1, Zeile 3 - Seite 2, Zeile 32; Fig 1,2 *<br>--- | 5,6 | |
| A | FR-A-1 330 975 (C. VAN DER LELY NV.)<br>* Seite 4, Zeile 8-19; Fig 5 *<br>--- | 7,8 | |
| A | EP-A-0 203 023 (KUHN. S.A.)<br>----- | | |

RECHERCHIERTE SACHGEBIETE (Int. Cl.5)

A 01 D
A 01 B

Der vorliegende Recherchenbericht wurde für alle Patentansprüche erstellt

| Recherchenort | Abschlußdatum der Recherche | Prüfer |
|---|---|---|
| DEN HAAG | 11-01-1990 | BODART P.A. |